# EUROPEAN PATENT APPLICATION

(11) **EP 2 743 666 A1**
(43) Date of publication of application: **18.06.2014**
(21) Application number: 13194480.3
(22) Date of filing: 26.11.2013
(51) Int. Cl.: G01L 19/00

(54) **Pressure sensor housing assembly**

(30) Priority: 11.12.2012 IT PD20120373
(71) Applicant: Dab Pumps S.p.A., 35035 Mestrino (Padova) (IT)
(72) Inventor: Tazioli, Stefano, 57016 Rosignano Marittimo, Località Gabbro LI (IT); Sinico, Francesco, 36075 Montecchio Maggiore VI (IT)
(74) Representative: Modiano, Micaela Nadia

(57) **Abstract**

A pressure transducer (10), particularly to be installed in liquid pumping devices, comprising a cup-shaped container (11) from the bottom (12) of which a connector (13) protrudes for connection to a pressurized duct; the connector (13) and the bottom (12) are traversed by a through hole (14) for the passage of fluid inside the transducer (10) to a pressure sensor (15); the transducer (10) comprises means (19) for locking the pressure sensor (15) in a single possible orientation inside the container (11) and means (26) for preventing the extraction of the pressure sensor (15) from the container (11).

## Description

The present invention relates to a pressure transducer.

Currently, a pressure-controlled switch or a pressure transducer is usually installed in hydraulic circuits and in pumping devices.

The former opens and closes mechanically a hydraulic circuit depending on whether a certain level of pressure is exceeded or not, while the latter is capable of detecting the spot pressure of the fluid and of sending this value to a device, which, by comparing it with the set value of the intervention pressure, controls the opening or closing of the circuit.

Moreover, in order to change the value of the intervention pressure, while the former requires a calibration operation, which is often difficult for a non-expert user and requires the use of tools and of a pressure gauge, the latter does not need to be calibrated and the intervention pressure can be set directly by the user by selection from an interface panel.

Substantially, transducers are more advanced devices than pressure-controlled switches, but they are also more expensive and therefore, for products dedicated to a less demanding market segment, the installation of pressure-controlled switches is often preferred.

Pressure transducers are devices enclosed in a cup-shaped container that is often cylindrical and from the bottom of which a threaded connector protrudes for connection to a pressurized duct. The container accommodates a pressure sensor, which comprises a ceramic flat element in which a Wheatstone bridge is embedded, and an electronic board. The ceramic element is in contact on one side with the water under pressure, which enters the transducer through the connector and the bottom of the container, which are traversed conveniently by a through hole, and at the other side with air at atmospheric pressure, and the bridge protrudes from this side of the flat element with pins to which the electronic board is connected, said board being resting on and fixed to the surface of said element.

The pressure sensor must be kept in a given position in the container in order to ensure a stable connection of the electronic board to a connector that connects it to an external device for the processing and control of the signal.

Despite being widespread, these pressure transducers have drawbacks, including the difficulty encountered by maintenance personnel in screwing and unscrewing the transducer, especially when it is installed within a complex pumping device, due to its cylindrical shape.

Moreover, the dimensions of the transducer are due not so much to the presence of the internal parts that compose it but rather to its internal architecture and to the fact that some parts are screwed to each other, causing an overall space occupation inside the pumping device that would preferably be reduced.

The aim of the present invention is to provide a pressure transducer that is compact and smaller than the ones already commercially available and facilitates maintenance operations.

Within this aim, an object of the invention is to provide a pressure transducer that can be inserted into and extracted from the pumping device easily and in reduced time.

This aim, as well as these and other objects that will become more apparent hereinafter, are achieved by a pressure transducer, particularly to be installed in liquid pumping devices, comprising a cup-shaped container from the bottom of which a connector protrudes for connection to a pressurized duct, said connector and said bottom being traversed by a through hole for the passage of fluid inside said transducer to a pressure sensor, said transducer being **characterized in that** it comprises means for locking said pressure sensor in a single possible orientation inside said container and means for preventing the extraction of said pressure sensor from said container.

Further characteristics and advantages of the invention will become more apparent from the description of a preferred but not exclusive embodiment of the transducer according to the invention, illustrated by way of non-limiting example in the accompanying drawings, wherein:
Figure 1 is an exploded perspective view of the transducer according to the invention;
Figure 2 is a top view of the transducer according to the invention;
Figure 3 is a sectional view of Figure 2, along the plane III-III;
Figure 4 is a sectional view of Figure 2, along the plane IV-IV;
Figure 5 is a side view of the transducer according to the invention;
Figure 6 is a sectional view of Figure 5, along the plane VI-VI.

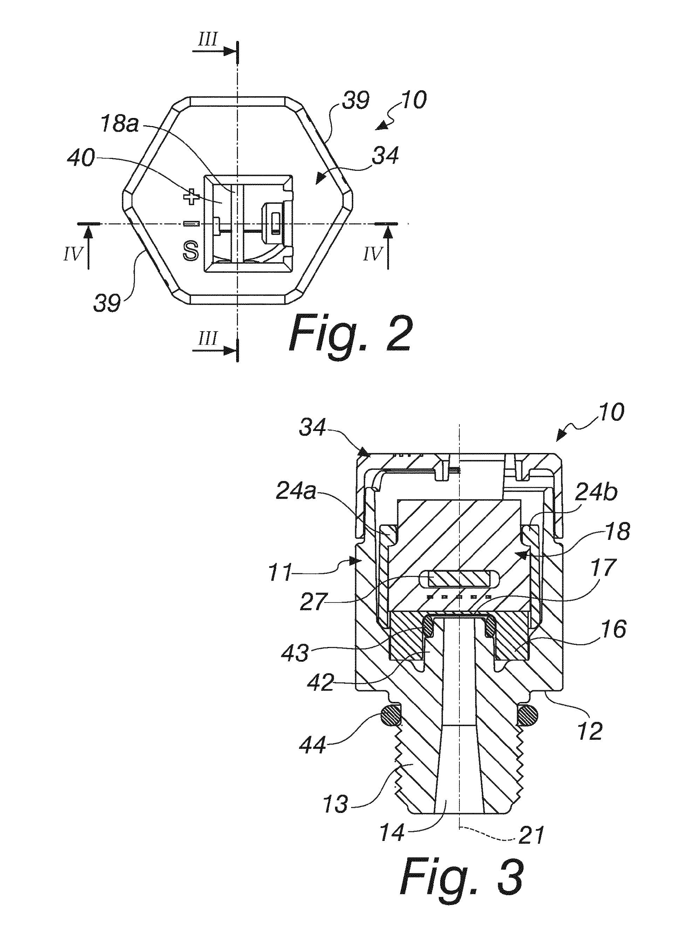

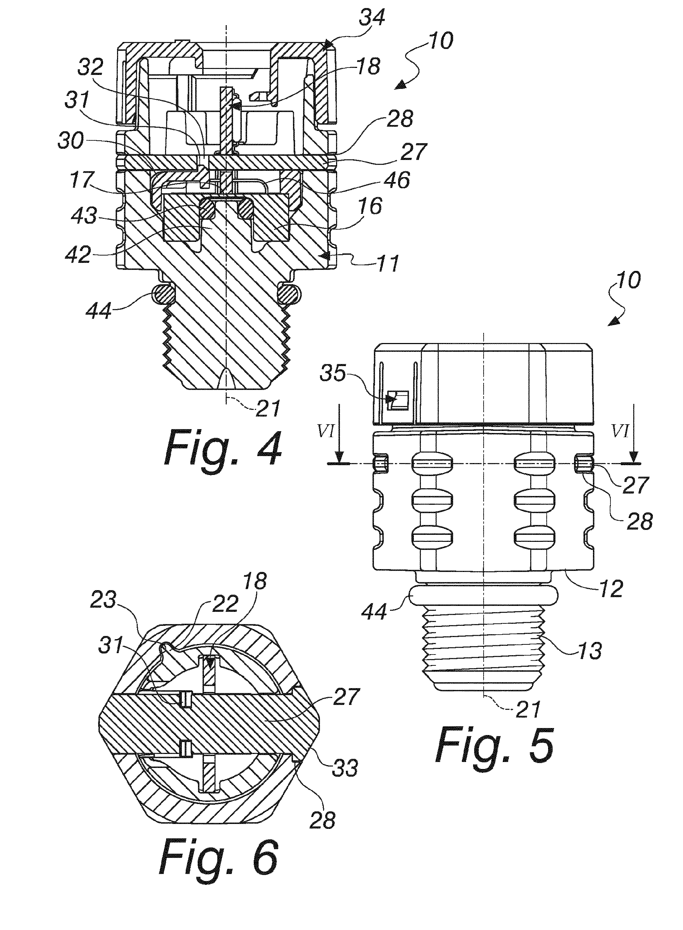

With reference to the cited figures, the transducer according to the invention, generally designated by the reference numeral 10, comprises a cup-shaped container 11, from the bottom 12 of which an externally threaded connector 13 protrudes for connection to a pressurized duct. The connector 13 and the container 11 are both conveniently traversed by a through hole 14 for the passage of fluid inside the transducer 10 to a pressure sensor 15. More precisely, the container 11 and the connector 13 are provided monolithically, as shown clearly in the sectional views of Figures 3 and 4.

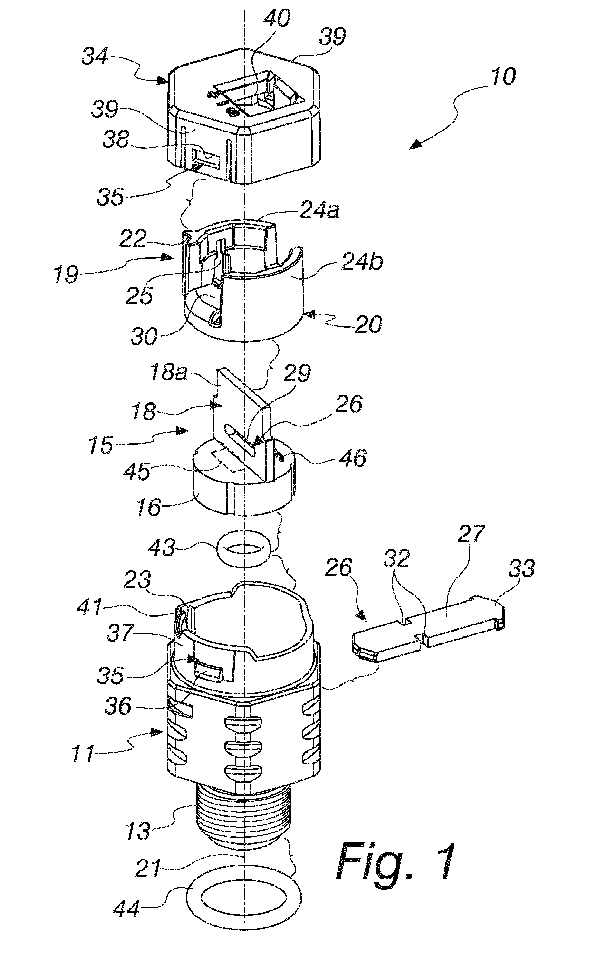

The pressure sensor 15 comprises a flat functional element 16, which is made of ceramic and is substantially disc-shaped, with a cavity that forms an internal membrane-type portion 17 of limited thickness, and an electronic board 18 that is installed on the flat functional element 16 at right angles to the internal membrane-type portion 17 and is connected thereto. In particular, an electric circuit, specifically a Wheatstone bridge 45, is embedded in the internal membrane-type portion 17 and protrudes from it with four pins 46, shown in Figures 1 and 4, by means of which the connection to the electronic board 18 is established. Said internal membrane-type portion 17 is subjected to the pressure of the fluid that enters the transducer 10 through the through hole 14 and the electronic board 18 is preset to transduce the pressure that acts on the internal membrane-type portion 17 and therefore the electrical variation in the Wheatstone bridge, and to send its signal to a processing and control device of the pumping device.

The pressure sensor 15 must be accommodated in a specific position inside the container 11 in order to ensure a stable connection of the electronic board 18 to a connector that connects it to an external signal control and processing device.

In this regard, the electronic board 18 acts as plug, which conveniently has an engagement portion 18a that enters the connector. Advantageously, the transducer 10 comprises means 19 for locking the pressure sensor 15 in a single possible orientation within the container 11, which comprise a cup-shaped intermediate element 20 that supports the pressure sensor 15 and enters with it the container 11 along the longitudinal axis 21 of the latter, according to a single possible orientation, since it is provided externally, on a wall thereof that is shaped complementary to the cavity of the container 11, with a raised portion 22 which, during insertion, slides in a corresponding slot 23 of the container 11. Vice versa, in an alternative embodiment, not shown here, the container can be provided with a raised portion that protrudes inward and the cup-shaped intermediate element on the other hand can have a corresponding complementarily shaped slot within which the raised portion of the container slides during insertion.

More precisely, in this embodiment the cup-shaped intermediate element 20 has two mutually opposite crescent-shaped walls 24a and 24b, the first of which bears the raised portion 22 on its outer side. Both crescent-shaped walls 24a and 24b have, on the inner side of the curvature, two mutually opposite guides 25 (only one of which is clearly visible in Figure 1) and the intermediate cup-shaped element 20 conveniently has an opening on its bottom, which is not visible in the accompanying figures, so that this last element and the pressure sensor 15 are associated by sliding of the electronic board 18 in the two mutually opposite guides 25.

Moreover, the transducer 10 also comprises means 26 for preventing the extraction of the pressure sensor 15 from the container 11.

In particular, said extraction-preventing means 26 comprise a pivot 27 that is inserted transversely in the container 11 through an insertion slot 28 (shown in Figure 5) and passes through the electronic board 18 at an adapted window 29 provided therein (shown in Figure 1).

More particularly, the pivot 27 consists of a plate that passes through the container 11 from one side to the opposite side and the cup-shaped intermediate element 20 is provided with a cantilever element 30 between the two crescent-shaped walls 24a and 24b, which is folded toward the center, proximate to which it has, at its free end, two teeth 31 that engage by snap action the pivot 27, each entering a corresponding seat 32 of the pivot 27.

Conveniently, the pivot 27, in its plate-like shape, has for insertion a grip head 33 that identifies uniquely the side thereof for insertion in the container 11, an insertion slot 28 of suitable dimensions which is larger than its opposite one corresponding to the head.

The container 11 advantageously has a hexagonal cross-section and the transducer 10 comprises also a plug 34, also having a hexagonal cross-section, which closes the container 11 on the opposite side with respect to the side for association with the duct.

The plug 34 is coupled to the container 11 by snap-acting quick engagement means 35 that consist of two mutually opposite tabs 36 which protrude from a last portion 37 of the container 11 and of which only one is visible in Figures 1 and 5, said tabs entering by snap action corresponding slots 38 provided in two opposite faces 39 of the plug 34. These two faces 39 are rendered elastically deformable for the insertion of the tabs 36, being provided conveniently with two parallel cuts in the insertion direction.

The plug 34 is provided in an upward region with an opening 40 for the passage of the connectors that connect the electronic board 18 to the external processing and control device of the pumping device. The placement of the plug 34 according to the correct orientation, so that the opening 40 is in the correct position to ensure connection, is ensured by a protrusion 41 (shown in Figures 1 and 6) of the container 11 on its outer wall, so as to correspond to the slot 23, on which the plug 34 slides with a complementarily shaped recess, not shown, in order to be connected to the container 11 in a single possible orientation.

Conveniently, the transducer 10 is also provided with two gaskets of the O-ring type, both of which are clearly visible in Figures 1, 3 and 4.

Observing the cross-sections shown in Figures 3 and 4, it can be noted that the container 11 has, at the bottom 12, a portion 42 for association with the flat functional element 16. The association portion 42 enters the cavity of the flat functional element 16 to arrange itself so that the through hole 14 is at the internal membrane-type portion 17.

A first gasket 43 is interposed between said association portion 42 and the flat functional element 16 in order to prevent the fluid that enters the transducer 10 through the through hole 14 from reaching the electronic part.

A second gasket 44 is arranged on the connector 13, at the bottom 12 of the cup-shaped container 11, for connection of the transducer 10 to the duct.

The use of the transducer according to the invention is as follows in its assembly.

The pressure sensor 15 is inserted in the cup-shaped intermediate element 20, with the electronic board 18 in the two mutually opposite guides 25, and they are inserted together in the container 11 after the first gasket 43 has been placed on the association portion 42. These elements are oriented so that during insertion the raised portion 22 slides within the slot 23.

After this, the pivot 27 is inserted transversely in the container 11 through the insertion slot 28 and passes through the electronic board 18, passing through the window 29. In this manner extraction of the pressure sensor 15 from the container 11 is prevented. Furthermore, during insertion the pivot 27 engages by snap action the cup-shaped intermediate element 20, accommodating in the seats 32 the teeth 31 of the cantilever element 30, and in this manner any accidental exit of the pivot 27 is prevented.

Finally, the transducer 10 is closed with the plug 34, which is caused to slide appropriately with its recess on the protrusion 41 and is applied in a unique position on the container 11, so that the electronic board 18 can be connected to the external device through the opening 40.

The transducer 10 thus assembled is ready to be installed on the duct.

It should be noted that the transducer 10 according to the invention can be assembled easily and quickly, ensuring the association of the parts in unique orientations in order to ensure the correct operation thereof.

It should also be noted that the components are mutually associated without threaded parts but only by means of sliding guides and parts that engage by snap action, reducing significantly the overall space occupation of the transducer.

In practice it has been found that the invention achieves the intended aim and objects, providing a pressure transducer that is compact and easy to use both during assembly and during installation within the pumping device, thanks to the way in which its parts are associated and thanks to its hexagonal external contour.

One advantage of the transducer in fact arises from its hexagonal contour, which allows screwing and unscrewing it to and from the duct with a simple hex wrench instead of clamps or other special tools.

Another advantage arises from constructive simplicity, which leads to low costs and therefore to the possibility of installing the transducer even in circuits for which the use of pressure-controlled switches was provided previously.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. PD2012A000373 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A pressure transducer (10), particularly to be installed in liquid pumping devices, comprising a cup-shaped container (11) from the bottom (12) of which a connector (13) protrudes for connection to a pressurized duct, said connector (13) and said bottom (12) being traversed by a through hole (14) for the passage of fluid inside said transducer (10) to a pressure sensor (15), said transducer (10) being **characterized in that** it comprises means (19) for locking said pressure sensor (15) in a single possible orientation inside said container (11) and means (26) for preventing the extraction of said pressure sensor (15) from said container (11).

2. The transducer according to claim 1, **characterized in that** said pressure sensor (15) comprises a flat functional element (16) with an internal membrane-type portion (17) and an electronic board (18) that is installed on said flat functional element (16) at right angles to said internal membrane-type portion (17) and is connected thereto, said internal membrane-type portion (17) being subjected to the pressure of the fluid that enters through said through hole (14) and said electronic board (18) being designed to transduce the pressure that acts on said internal membrane-type portion (17) and send its signal to a device for processing and controlling said pumping device.

3. The transducer according to claim 1, **characterized in that** said locking means (19) comprise a cup-shaped intermediate element (20) that supports said pressure sensor (15) and is inserted therewith in said container (11) along the longitudinal axis (21) of the latter, being provided on the outside, in a single possible orientation, on a wall thereof that is shaped complementary to the cavity of said container (11), with a raised portion (22) which, during insertion, slides in a corresponding slot (23) of said container (11), or vice versa.

4. The transducer according to claims 2 and 3, **characterized in that** said intermediate cup-shaped element (20) and said pressure sensor (15) are associated by the sliding of said electronic board (18) in two mutually opposite guides (25) with which said cup-shaped intermediate element (20) is provided.

5. The transducer according to claim 1, **characterized in that** said extraction-preventing means (26) comprise a pivot (27) that is inserted transversely in said container (11) through an insertion slot (28) and passes through said electronic board (18) at an adapted window (29) provided therein.

6. The transducer according to claims 3 and 5, **characterized in that** said cup-shaped intermediate element (20) is provided with a cantilever element (30) that is folded toward the center, where it supports, at its end, at least one tooth (31) that engages by snap action said pivot (27), entering a corresponding seat (32) thereof.

7. The transducer according to claim 1, **characterized in that** said container (11) has a hexagonal cross-section.

8. The transducer according to claim 7, **characterized in that** it comprises a plug (34), which also has a hexagonal cross-section and closes said container (11), on the side opposite to the side for association with said duct, and is coupled thereto by snap-acting quick engagement means (35).

9. The transducer according to claims 3 and 8, **characterized in that** said container (11) has, on its external wall, a protrusion (41), so as to correspond to said slot (23), on which said plug (34) slides with a complementarily shaped recess so as to be associated with said container (11) in a single possible orientation.
